# EUROPÄISCHE PATENTANMELDUNG

(11) **EP 0 759 268 A1**
(43) Veröffentlichungstag der Anmeldung: **26.02.1997**
(21) Anmeldenummer: 96112944.2
(22) Anmeldetag: 12.08.1996
(51) Int. Cl.: A01D 43/00

(54) **Verfahren und Vorrichtung zum Sammeln und Verdichten von pflanzlichem Gut**

(30) Priorität: 11.08.1995 DE 19529709; 28.09.1995 DE 19536008; 29.10.1995 DE 19540188; 21.07.1996 DE 19629224
(71) Anmelder: Eggenmüller, Alfred, Dr., D-89275 Elchingen (DE)
(72) Erfinder: Eggenmüller, Alfred, Dr., D-89275 Elchingen (DE)
(74) Vertreter: Fiener, Josef

(57) **Zusammenfassung**

Zur verbesserten Aufnahme von gesammelten, pflanzlichem Gut, das von einer Mäh-, Aufnahme- oder Sammeleinrichtung (2) gesammelt und mit einem sich daran anschließenden Schneckenförderer (6) zu einem Behälter (3) gefördert wird, wird vorgeschlagen, daß das gesammelte Gut in einen durchmessergrößeren Aufnahmebereich (5) eines Schneckenförderers (6) eingebracht und dann in gleicher Förderrichtung auf einen durchmesserkleineren Förderquerschnitt des Schneckenförderers (6) zusammengeführt wird. Durch diese Ausbildung wird neben der sicheren Aufnahme des Gutes am Schneckenbeginn auch eine optimale Verdichtung und Auspressung des geförderten Gutes am Ende des Schneckenförderers (6) in Behälter (3) erreicht. Zudem wird durch den durchmesserkleineren Förderquerschnitt des Schneckenförderers (6) eine verbesserte Bodenfreiheit erreicht.

## Beschreibung

Die Erfindung betrifft ein Verfahren und eine Vorrichtung zum Sammeln und Verdichten von pflanzlichem Gut, insbesondere Rasenschnitt oder Laub, gemäß den oberbegrifflichen Merkmalen des Patentanspruches 1 bzw. 4.

Ein derartiges Verfahren bzw. eine derartige Vorrichtung ist beispielsweise aus der DE-A-1 582 399 bekannt. Hierbei ist an einem motorgetriebenen Rasenmäher eine Schnecke angebaut, die zum Pressen des geschnittenen Grases am Ausgangsbereich des Rasenmähergehäuses eine Preßdüse aufweist. Hierdurch wird das geschnittene Gras zu einem Strang gepreßt und in einen sich unmittelbar an das Rasenmähergehäuse anschließenden Korb gefördert. Der Schneckenförderer weist hierbei einen Einwurf entsprechend dem Förderquerschnitt auf, so daß zu erwarten ist, daß hierbei durch das in den Aufnahmebereich des Schneckenförderers eingebrachte pflanzliche Gut Verstopfungen in dem Tunnel über dem Rasenmähergehäuse auftreten. Hierdurch ist der Durchsatz begrenzt, so daß die Arbeitsgeschwindigkeit der Vorrichtung, inbesondere der Mähvorrichtung relativ gering ist.

Ähnliche Schneckenförderer werden in der FR-A-2 174 859 und FR-A-2 235 639 vorgeschlagen, wobei der Schneckenförderer seitlich parallel zur Arbeitsrichtung des Rasenmähers angeordnet ist. Hierbei ist jedoch der Aufnahmebereich des Schneckenförderers ebenfalls relativ klein ausgebildet. Aus der US-A-3,641,754 ist des weiteren eine Vorrichtung zum Sammeln und Verdichten von pflanzlichem Gut bekannt, wobei ein relativ groß dimensionierter Schneckenförderer vorgesehen ist. Dieser Schneckenförderer wird dabei durch zwei seitliche Zuführschnecken beschickt, wobei jedoch der Bauaufwand erheblich ist. Zudem wird hierbei durch die relativ große Förderschnecke die Bodenfreiheit der Mähvorrichtung beeinträchtigt. So muß die Hinterachse dieser Mähvorrichtung zur Durchführung der Förderschnecke zweiteilig ausgeführt werden. Weiterhin ist bei dieser Ausführung aufgrund der großen Dimensionierung der Förderschnecke keine wesentliche Verdichtung bzw. Pressung des gesammelten Gutes zu erwarten.

Demzufolge liegt der Erfindung die Aufgabe zugrunde, ein Verfahren und eine Vorrichtung zum Sammeln und Verdichten von pflanzlichem Gut anzugeben, mit dem bzw. mit der eine sichere Aufnahme des gesammelten Gutes und eine optimale Verdichtung bei der Weiterförderung erreichbar ist.

Diese Aufgabe wird gelöst durch ein Verfahren mit den Merkmalen des Patentanspruches 1 bzw. durch eine Vorrichtung mit den Merkmalen des Anspruches 4.

Durch die vorgeschlagene Verfahrensweise, wonach das gesammelte Gut zunächst in einen durchmessergrößeren Aufnahmebereich eines Schneckenförderers eingebracht wird und dann in gleicher Förderrichtung auf einen durchmesserkleineren Förderquerschnitt des Schneckenförderers zusammengeführt wird, bevorzugt in einem konischen Bereich, wird das von der Mäh-, Aufnahme- oder Sammeleinrichtung ankommende Gut aus dem Einwurfbereich sicher angenommen. Der durchmessergrößere Aufnahmebereich dient hierbei als Puffervolumen, so daß größere Arbeitsgeschwindigkeiten bzw. Materialdurchsätze möglich sind. Unmittelbar anschließend an den durchmessergrößeren Aufnahmebereich wird in gleicher Förderrichtung das so gesammelte Gut auf einen etwa um die Hälfte durchmesserkleineren Förderquerschnitt des Schneckenförderers zusammengeführt und hierbei bereits erheblich verdichtet.

Die Verdichtung kann hierbei im weiteren Verlauf des Schneckenförderers mit dem durchmesserkleineren Förderquerschnitt noch gesteigert werden, insbesondere wenn das durch den Schneckenförderer geförderte Gut beim Verlassen des Förder- oder Abgabequerschnittes an der Abgabeseite einem gegen die Förderrichtung gerichteten Gegendruck ausgesetzt wird. Bevorzugt läßt sich dieser Gegendruck durch eine Gegenschnecke erreichen, die achsgleich mit der Förderschnecke angeordnet ist, jedoch eine entgegengerichtete Steigung des Schneckenganges aufweist. Hierdurch wird zudem eine Umlenkung des geförderten Gutes in Radialrichtung erreicht, so daß hierdurch eine kontinuierliche Auspressung in den sich anschließenden Behälter erfolgt.

Hinsichtlich der Vorrichtung ist durch den durchmesserkleineren Förderquerschnitt des Förderrohrs eine Hindurchführung des Schneckenförderers unter den Achsen des Rasentraktors oder einer ähnlichen Aufnahme- oder Sammeleinrichtung möglich. Aufgrund des durchmesserkleineren Förderquerschnittes wird somit die Bodenfreiheit nicht wesentlich beeinträchtigt. Zudem sei darauf hingewiesen, daß der Schneckenförderer mit dem durchmessergrößeren Aufnahmebereich und gegebenenfalls der Gegenschnecke an der Abgabeseite nur einen einzigen Antrieb entweder frontseitig oder heckseitig benötigt. Zudem wird hierdurch der Bauaufwand und der Leistungsbedarf reduziert. Bei einer seitlichen Anordnung des Schneckenförderers kann zudem die seitliche Baubreite begrenzt werden, da der durchmesserkleinere Förderquerschnitt von z. B. nur 100 mm Durchmesser eng an den Rädern des Rasentraktors oder einer ähnlichen Sammelvorrichtung vorbeigeführt werden kann.

Bei breiten Mäh-, Aufnahme- oder Sammeleinrichtungen ist es möglich, vor dem durchmessergrößeren Aufnahmebereich des Schneckenförderers eine Zuführeinrichtung vorzusehen. Diese liegt bei Mähwerken unmittelbar über den umlaufenden Messern und nimmt das gesammelte Gut über eine Aufnahmekante auf. Mit einer derartigen Zuführeinrichtung, insbesondere in Form einer Zinkenrotors kann auch eine Vorzerkleinerung erreicht werden, bevor das gesammelte Gut in den Aufnahmebereich des Schneckenförderers gepreßt wird. Auch hierbei kann der Antrieb des Schneckenförderers und der Zuführeinrichtung von einem einzigen Antrieb aus in kompakter Weise erfolgen. Es ist dabei auch möglich, daß der Schneckenförderer nur einseitig an der Antriebsseite gelagert ist, während die andere Seite "fliegend" im Förderrohr gelagert ist.

Weitere vorteilhafte Ausgestaltungen der Erfindung sind Gegenstand der Unteransprüche. Nachfolgend werden mehrere Ausführungsbeispiele anhand der Zeichnungen näher erläutert und beschrieben. Hierbei zeigen:
- Fig. 1: einen Schneckenförderer an einem Rasentraktor mit Zwischenachsmähwerk in Seitenansicht;
- Fig. 2: eine Draufsicht gemäß der Ausführung in Fig. 1;
- Fig. 3: die Abgabeseite eines nach oben gekrümmten Schneckenförderers;
- Fig. 4: die Abgabeseite des Schneckenförderers in einer abgewandelten Ausführung von Fig. 3;
- Fig. 5: die Abgabeseite des Schneckenförderers in einer weiteren Ausführung mit einer Querfördereinrichtung nach oben;
- Fig. 6: eine Seitenansicht der Ausführung gemäß Fig. 5;
- Fig. 7: den Antrieb von Heckgeräten durch den Schneckenförderer;
- Fig. 8: den Abtrieb und die Lagerung des Schneckenförderers an der Abgabeseite;
- Fig. 9: eine bevorzugte Ausführung des Schneckenförderers, der seitlich von einem Fahrzeug mit Frontmähwerk angeordnet ist, in Seitenansicht;
- Fig. 10: eine Draufsicht gemäß Fig. 9;
- Fig. 11: den Aufnahmebereich des Schneckenförderers mit einer vorgeschalteten Zuführeinrichtung;
- Fig. 12: eine Draufsicht gemäß Fig. 11;
- Fig. 13: eine abgewandelte Ausführung der Zuführeinrichtung zum Aufnahmebereich des Schneckenförderers;
- Fig. 14: eine Draufsicht gemäß der Ausführungsform in Fig. 13;
- Fig. 15: eine vergrößerte Darstellung des Aufnahmebereiches des Schneckenförderers mit Zuführeinrichtung;
- Fig. 16: eine bevorzugte Ausführungsform des Schneckenförderers in seitlicher Anordnung;
- Fig. 17: eine Draufsicht gemäß Fig. 16;
- Fig. 18: eine vergrößerte Vorderansicht auf den Aufnahmebereich des Schneckenförderers;
- Fig. 19: eine Draufsicht auf die Ausführung gemäß Fig. 18;
- Fig. 20: eine Seitenansicht auf eine Sammeleinrichtung mit einer Querförderschnecke; und
- Fig. 21: eine Draufsicht auf die Ausführung gemäß Fig. 20.

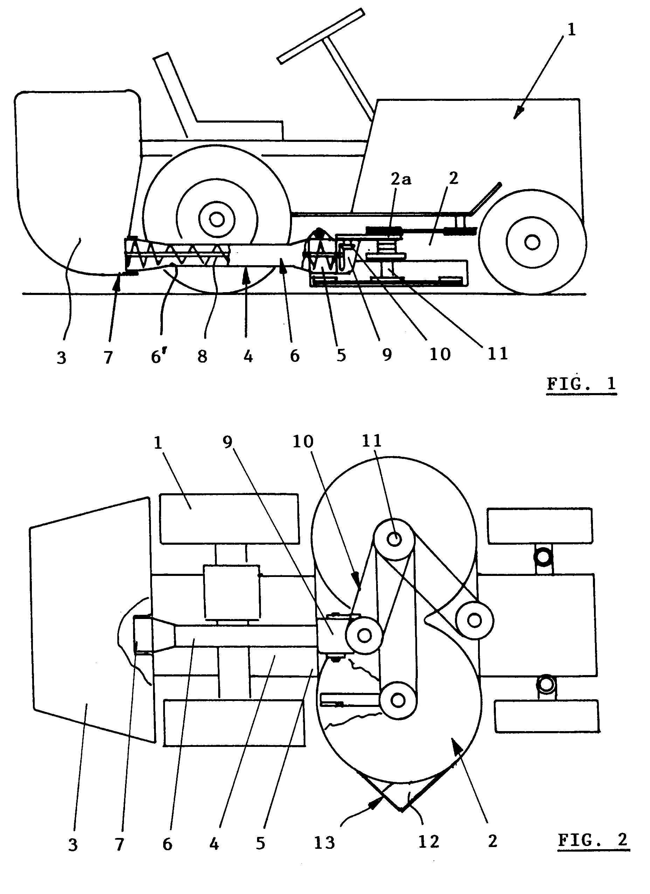

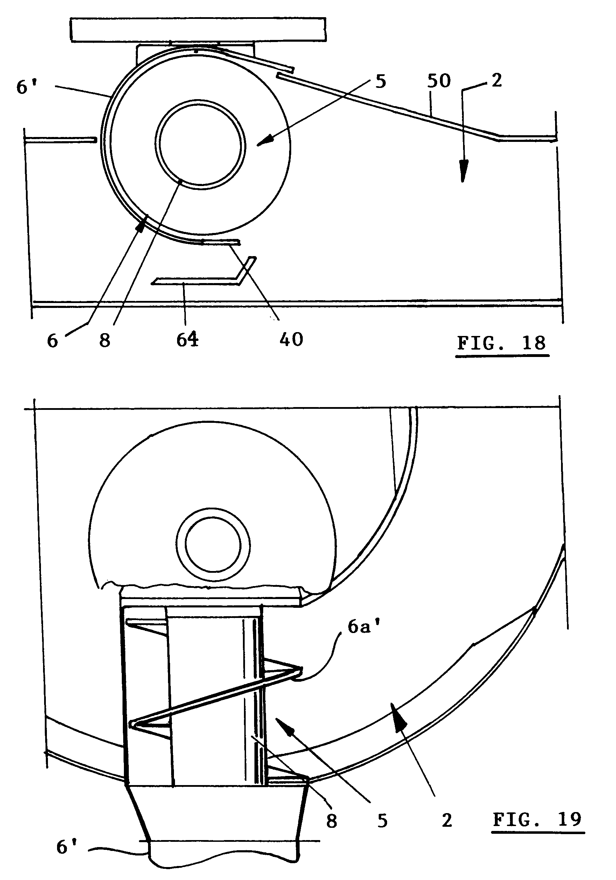

In den Fig. 1 und 2 ist ein Rasentraktor 1 mit einem Zwischenachsmähwerk 2 und einem heckseitig angeschlossenen Behälter 3 zum Sammeln von pflanzlichem Gut, insbes. Rasenschnitt dargestellt. Ein umlaufendes Messer (vgl. Fig. 18) wirft das geschnittene Gut in einen Einlauf bzw. Aufnahmebereich 5 einer als Schneckenförderer ausgebildeten Fördervorrichtung 4. Der Schneckenförderer 6 hat einlaufseitig einen größeren Durchmesser als im weiteren Verlauf, um eine gute Aufnahme des vom Messer abgeschleuderten Gutes zu gewährleisten. Am rückwärtigen Schneckenende bzw. Abgabeseite 7, bei der Einmündung in den Behälter 3, ist der Durchmesser ebenfalls größer, um eine gute Befüllung des Behälters 3 zu sichern. Eine Schneckenwelle 8 wird über ein Winkelgetriebe 9 und einen Antrieb 10 von einer Messerwelle 11 des Mähwerkes 2 aus angetrieben.

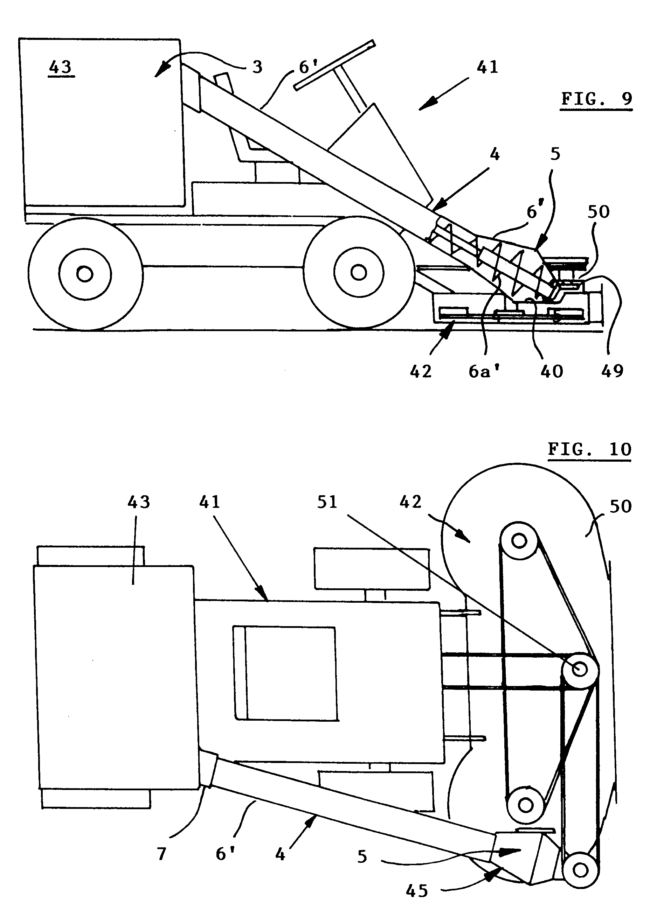

Wie in Fig. 2 angedeutet, kann auch ein Seitenauswurf 12 für den Fall einer gewünschten Reihenablage des Schnittgutes geöffnet oder mit einem Auswerfer 13 abgedeckt werden. Für den hier relevanten Preß-Betrieb wird jedoch der Rasenschnitt direkt in den Aufnahmebereich 5 des Schneckenförderers 6 geschleudert. Da dieser Aufnahmebereich 5 gegenüber dem Förderquerschnitt des Schneckenförderers 6 einen größeren, bevorzugt etwa zweifachen Durchmesser aufweist, steht somit ein etwa dreifach so großes Aufnahmevolumen am Einlauf des Schneckenförderers 6 bereit. Der Schneckenförderer 6 ist im einzelnen aus einem Förderrohr 6' gebildet, in dem eine Förderschnecke 6a mit wenigstens einem Schneckengang 6a' (vgl. Fig. 9) umläuft. Es sei darauf hingewiesen, daß sich dieser Schneckengang 6a' der Förderschnecke 6a zum Aufnahmebereich 5 hin konisch oder trompetenartig erweitert. Damit wird das in dem Aufnahmebereich 5 eintreffende Gut bei der Weiterförderung nach hinten hin auf den relativ dazu durchmesserkleineren Förderquerschnitt des Förderrohrs 6' zwangsweise zusammengeführt und verdichtet.

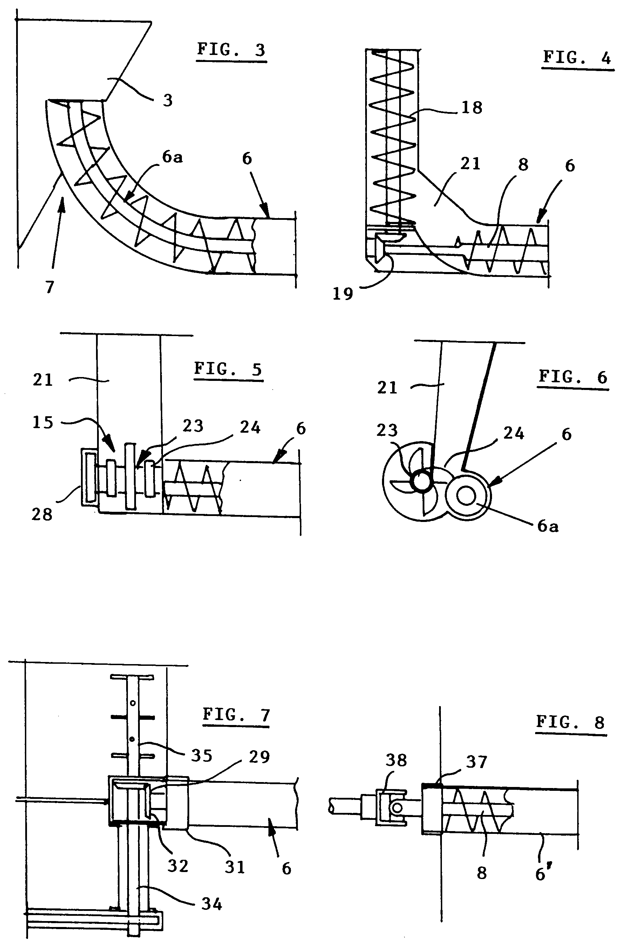

In Fig. 3 ist der Schneckenförderer 6 an seinem hinteren Ende nach oben gekrümmt, um den hochgelegenen Behälter 3 von unten her zu füllen. Die Förderschnecke 6a ist hierbei durch einzelne Gelenkabschnitte oder mittels einer biegsamen Welle flexibel ausgebildet. Auch der Schneckengang 6a' ist hierbei um die Richtung der Schneckenwelle 8 biegbar, d. h. mit relativ dünnem Materialguerschnitt ausgeführt.

In Fig. 4 ist am rückwärtigen Ende des Schneckenförderers 6 ein weiterer, senkrecht nach oben arbeitender Schneckenförderer 18 als eine Ausführung einer Querfördereinrichtung 15 angeschlossen. Er wird über einen Winkeltrieb 19 von der Schneckenwelle 8 angetrieben. Das vom waagrechten Schneckenförderer 6 ankommende Gut wird über einen Preßkanal 21 dem weiterführenden Schneckenförderer 18 zugeführt, um in den Behälter 3 von unten her eingepreßt zu werden.

In den Fig. 5 und 6 ist am rückwärtigen Ende des Schneckenförderers 6 als weitere Alternative der Querfördereinrichtung 15 ein Hochförderer 23 angeschlossen, der das von der Förderschnecke 6a vorgelegte Gut mittels eines Zinkenrotors 24 über den Preßkanal 21 in den Behälter 3 drückt. Der Zinkenrotor 24 wird über ein Vorgelege 28 von der Schneckenwelle 8 angetrieben.

In Fig. 7 ist am Abgabeende des Schneckenförderers 6 ein Winkelgetriebe 29 mittels einer Kupplungshülse 31 befestigt. Zugleich mit dem Ankuppeln wird die Welle eines Antriebsrades 32 mit der Welle 8 des Schneckenförderers 6 verbunden. Über eine Querwelle 34 können Heck-Arbeitsgeräte mit Seitenantrieb, aber auch beispielsweise eine direkt arbeitende Streuwelle 35 angetrieben werden.

In Fig. 8 ist am Schneckenförderer 6 eine Kupplungshülse 37 am Förderrohr 6' und eine Gelenkwelle 38 an der Schneckenwelle 8 angeschlossen. Mit dieser "Zapfwelle" können angebaute oder angehängte Geräte über die Gelenkwelle 38 angetrieben werden. Wird dabei das Mähwerk 2 nicht benötigt, kann es durch die an ihm angebrachte Kupplung 2a (vgl. Fig. 1) ausgeschaltet werden.

In den Fig. 9 und 10 ist der Rasentraktor 1 mit einem Frontmähwerk 42 als Mähvorrichtung 2 und einem Hochbehälter 43 als Behälter 3 ausgerüstet. Der Schneckenförderer 6 ist am Seitenauswurf 45 des Frontmähwerkes 42 angeordnet. Er ist an seinem Aufnahmebereich 5 mit doppelt-konisch verlaufenden Schneckengängen 6a' ausgerüstet, um eine waagrecht liegende Aufnahmekante 40 (vgl. Fig. 18) zu überstreichen. Im weiteren Verlauf der Fördervorrichtung 4 reduziert sich der Durchmesser der Schneckengänge 6a' auf das Maß des Förderrohrs 6', das etwa den halben Durchmesser des Aufnahmebereichs 5 besitzt. Dadurch ergibt sich eine charakteristische, "keulenartige" Form des Aufnahmebereiches 5 des Schneckenförderers 6. Der Antrieb der Schneckenwelle 8 erfolgt über einen Winkelantrieb 49 und einen Riementrieb über der Mähwerk-Abdeckung 50 von einer Messerwelle 51 aus.

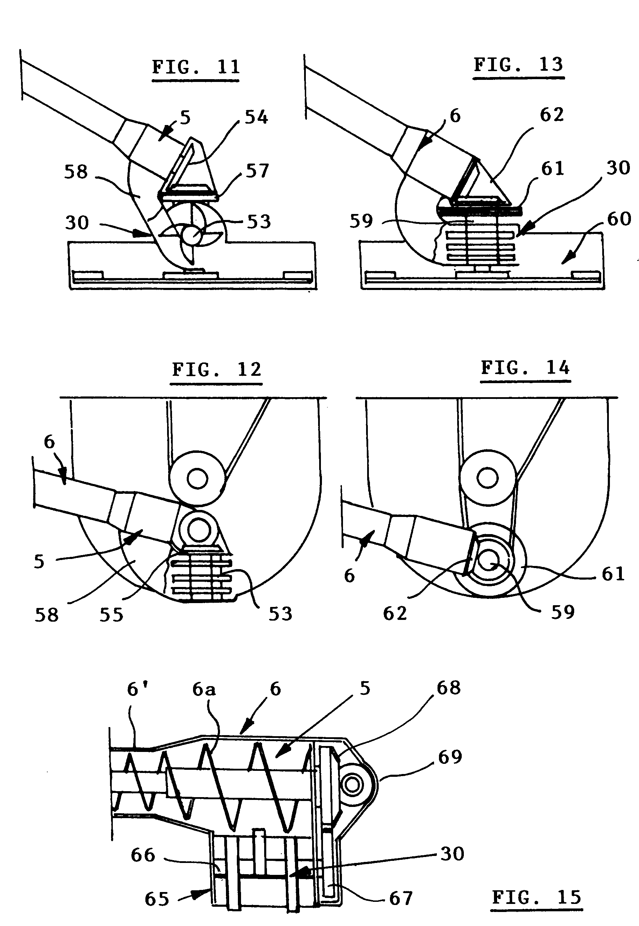

In den Fig. 11 und 12 ist dem Schneckenförderer 6 ein Zinkenrotor 53 mit waagrecht liegender Achse als Zuführeinrichtung 30 vorgeschaltet, um die Aufnahme bei besonders großem Durchsatz weiterzuverbessern. Ein Winkelgetriebe 54 für den Schneckenförderer 6 und ein Winkelgetriebe 55 für den Zinkenrotor 53 haben eine gemeinsame Antriebswelle mit einer Keilriemenscheibe 57, die über einen Riementrieb von einer Messerwelle angetrieben wird. Das aufgenommene Gut wird vom Zinkenrotor 53 über einen Preßkanal 58 dem durchmessergrößeren Aufnahmebereich 5 des Schneckenförderers 6 direkt zugeführt.

In den Fig. 13 und 14 ist eine Welle 59 eines in einem Mähwerk 60 integrierten Zinkenrotors als Zuführeinrichtung 30 senkrecht angeordnet und wird direkt über eine Riemenscheibe 61 angetrieben. Ein darüber liegendes, kompaktes Winkelgetriebe 62 treibt die Förderschnecke 6a bzw. die Schneckenwelle 8 des Schneckenförderer 6 direkt an.

In den Fig. 15 ist dem Schneckenförderer 6 als weitere mögliche Ausführung der Zuführeinrichtung 30 ein parallel ausgerichteter Zuführrotor 65 vorgeschaltet. Da der Schneckenförderer 6, wie in den Fig. 1 und 2 dargestellt, im wesentlichen waagrecht arbeitet und die Welle 66 des Zuführrotors 65 ebenfalls waagrecht verläuft, kann der Antrieb der Welle 66 über einen einfachen Ketten- oder Zahnradtrieb 67 vom Winkeltrieb 68 des Schneckenförderers 6 aus erfolgen. Dabei liegen beide Getriebe in einem geschlossenen Gehäuse 69. Wie aus dieser vergrößerten Darstellung des Aufnahmebereiches 5 des Schneckenförderers 6 ersichtlich ist, ist die Außenform des Förderrohrs 6' konisch bzw. in Art einer Posaune oder eines Diffusors erweitert und ebenso die Außenform der Förderschnecke 6a im Aufnahmebereich 5 dementsprechend angepaßt.

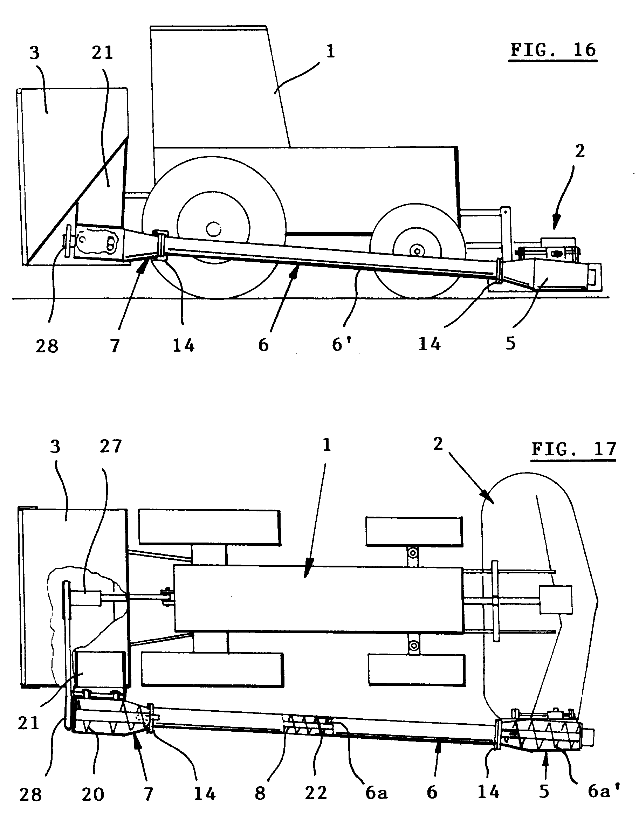

In Fig. 16 und 17 ist ein derartiger konisch erweiterter "Aufnahmekopf" im Aufnahmebereich 5 des Schneckenförderers 6 dargestellt. Dieser Aufnahmekopf ist bevorzugt mittels eines Flansches oder Schnellverschlusses 14 an das Förderrohr 6' des Schneckenförderers 6 angekuppelt. An der rückseitigen Abgabeseite 7 des Schneckenförderers 6 ist ein ähnlich gestalteter, durchmessergrößerer "Preßkopf" vorgesehen, der gelenkig am Behälter 3 angebracht ist. Dieser Preßkopf mit einer zur Förderschnecke 6a gegenläufigen Gegenschnecke 20 pressen das Gut über den Preßkanal 21 nach oben in den heckseitigen Behälter 3.

Der Schneckenförderer 6 ist hierbei in seiner Mitte in einer Buchse 22 zwischengelagert. Die Schneckengänge 6a' der Förderschnecke 6a weisen an dieser Stelle eine größere Dicke auf. Hierdurch wird eine exakte Zentrierung der Förderschnecke 6a erreicht. Es sei darauf hingewiesen, daß die gesamte Einrichtung von der Rückseite aus über den Preßkopf mittels eines Vorgeleges 28 und einer Gelenkwelle 27 vom Schlepper 1 angetrieben sein kann.

In Fig. 18 und 19 ist der hier besonders wesentliche Aufnahmebereich 5 des Schneckenförderers 6 vergrößert dargestellt. Hieraus ist die sich gegenüber dem Förderquerschnitt konisch erweiternde Gestaltung des Schneckenganges 6a' ersichtlich. Bevorzugt ist dabei der erweiterte Bereich des Förderrohrs 6' mit einer horizontalen Aufnahmekante 40 versehen, unter der im geringen Abstand die Messer 64 eines von einer Abdeckung 50 umschlossenen Einzel- oder Mehrfach-Mähwerkes 60 (vgl. Fig. 13) vorbeilaufen. Durch die schräg nach oben gezogene Abdeckung 50 wird ein direktes Abschleudern des gemähten bzw. gesammelten Gutes in den vergrößerten Aufnahmebereich 5 erreicht.

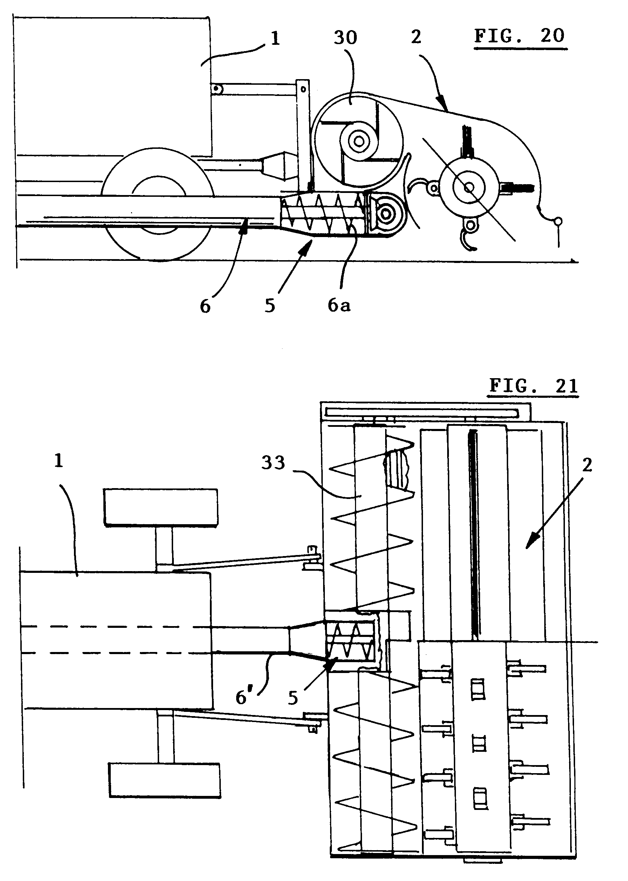

In Fig. 20 und 21 ist schließlich eine Aufnahme- und Sammelvorrichtung 2 in Form einer Kehrmaschine bzw. eines alternativ dargestellten Schlegelmähers gezeigt, wobei dem erweiterten Aufnahmebereich 5 des Schneckenförderers 6 das durch die Kehrmaschine breitflächig gesammelte Gut über eine als Querförderschnecke 33 ausgebildete Zuführeinrichtung 30 mittig (oder auch seitlich) zugeführt wird. Der erweiterte Aufnahmebereich 5 des Schneckenförderers 6 ist hierbei bevorzugt direkt unter der Querförderschnecke 33 angeordnet.

## Patentansprüche

1. Verfahren zum Sammeln und Verdichten von pflanzlichem Gut, insbesondere Rasenschnitt oder Laub, wobei das pflanzliche Gut von einer Mäh-, Aufnahme- oder Sammeleinrichtung (2) gesammelt und mit einem sich daran anschließenden Schneckenförderer (6) zu einem Behälter (3) gefördert wird,
dadurch gekennzeichnet, daß
das gesammelte Gut in einen durchmessergrößeren Aufnahmebereich (5) eines Schneckenförderers (6) eingebracht und dann in gleicher Förderrichtung auf einen durchmesserkleineren Förderquerschnitt des Schneckenförderers (6) zusammengeführt wird.

2. Verfahren nach Anspruch 1, dadurch gekennzeichnet, daß das geförderte Gut an der Abgabeseite (7) des Schneckenförderers (6) in gleicher Förderrichtung in einen durchmessergrößeren Abgabequerschnitt übergeführt wird.

3. Verfahren nach Anspruch 1 oder 2, dadurch gekennzeichnet, daß das geförderte Gut an der Abgabeseite (7) des Schneckenförderers (6) beim Verlassen des Förder- oder Abgabequerschnittes einem gegen die Förderrichtung gerichteten Gegendruck ausgesetzt wird.

4. Vorrichtung zum Sammeln und Verdichten von pflanzlichem Gut, insbesondere Rasenschnitt oder Laub, mit einer Mäh-, Aufnahme- oder Sammeleinrichtung (2), einer sich daran anschließenden Fördereinrichtung (4) und wenigstens einem Behälter (3), wobei die Fördereinrichtung (4) aus einem Schneckenförderer (6) mit einem Förderrohr (6') mit vorgegebenem Förderquerschnitt und einer darin umlaufenden Förderschnecke (6a) besteht,
dadurch gekennzeichnet, daß
der Schneckenförderer (6) an seinem Aufnahmebereich (5) einen größeren Durchmesser aufweist als der Förderquerschnitt des Förderrohrs (6').

5. Vorrichtung nach Anspruch 4, dadurch gekennzeichnet, daß der Schneckenförderer (6) an seiner Abgabeseite (7) einen größeren Querschnitt als den Förderquerschnitt des Förderrohrs (6') aufweist.

6. Vorrichtung nach Anspruch 4 oder 5, dadurch gekennzeichnet, daß der Schneckenförderer (6) an seiner Abgabeseite (7) an eine Querfördereinrichtung (15) angeschlossen ist.

7. Vorrichtung nach Anspruch 6, dadurch gekennzeichnet, daß die Querfördereinrichtung (15) von einer gegen die Förderrichtung des Schneckenförderers (6) fördernden Gegenschnecke (20) gebildet ist.

8. Vorrichtung nach einem der Ansprüche 4 bis 7, dadurch gekennzeichnet, daß die Schneckengänge (6a') der Förderschnecke (6a) sich im Aufnahmebereich (5) des Schneckenförderers (6) in ihrem Durchmesser konisch erweitern.

9. Vorrichtung nach einem der Ansprüche 4 bis 8, dadurch gekennzeichnet, daß an dein Aufnahmebereich (5) des Schneckenförderers (6) eine Zuführeinrichtung (30) vorgeordnet ist.

10. Vorrichtung nach einem der Ansprüche 4 bis 9, dadurch gekennzeichnet, daß an der Mäh-, Aufnahme- oder Sammeleinrichtung (2) unterhalb des Aufnahmebereiches (5) des Schneckenförderers (6) eine Aufnahmekante (40) ausgebildet ist.

11. Vorrichtung nach Anspruch 10, dadurch gekennzeichnet, daß die Aufnahmekante (40) bei einem Mähwerk (60) mit geringem Abstand über dem darunter umlaufenden Messer (64) angeordnet ist.

12. Vorrichtung nach einem der Ansprüche 4 bis 11, dadurch gekennzeichnet, daß die Mäh-, Aufnahme- oder Sammeleinrichtung (2) von einer Abdeckung (50) zumindest bereichsweise umgeben ist, wobei die Abdeckung (50) zum Aufnahmebereich (5) des Schneckenförderers (6) schräg nach oben verläuft.

13. Vorrichtung nach einem der Ansprüche 4 bis 12, dadurch gekennzeichnet, daß das Förderrohr (6') des Schneckenförderers (6) eine Lagerbuchse (22) aufweist und die Schneckengänge (6a') der Förderschnecke (6a) in dem Bereich der Lagerbuchse (22) in der Materialdicke vergrößert sind.

14. Vorrichtung nach einem der Ansprüche 4 bis 13, dadurch gekennzeichnet, daß sich an der Abgabeseite (7) des Schneckenförderers (6) ein Preßkanal (21) zum Behälter (3) hin anschließt.

15. Vorrichtung nach einem der Ansprüche 4 bis 14, dadurch gekennzeichnet, daß der Antrieb (27, 28) des Schneckenförderers (6) an dessen Abgabeseite (7) angeordnet ist.

16. Vorrichtung nach Anspruch 9, dadurch gekennzeichnet, daß die Zuführeinrichtung (30) als Querförderschnecke (33) ausgebildet ist, die sich über die Breite der Aufnahme- oder Sammeleinrichtung (2) erstreckt.
